# FASCICULE DE BREVET EUROPEEN

(11) **EP 0 700 531 B1**
(45) Date de publication et mention de la délivrance du brevet: **12.03.1997**
(21) Numéro de dépôt: 94917062.5
(22) Date de dépôt: 26.05.1994
(51) Int. Cl.: G02B 27/04, G02B 27/22

(54) **STEREOSCOPE PLIABLE**
FALTBARES STEREOSKOP
FOLDABLE STEREOSCOPE

(30) Priorité: 27.05.1993 FR 9306381
(43) Date de publication de la demande: 13.03.1996
(73) Titulaire: COACHE, Olivier, F-92410 Ville-d'Avray (FR)
(72) Inventeur: COACHE, Olivier, F-92410 Ville-d'Avray (FR)
(86) Numéro de dépôt international: FR9400623
(87) Numéro de publication internationale: WO9428453

(56) Documents cités:
- DE-U- 8 909 969
- GB-A- 824 873
- US-A- 2 715 853
- US-A- 2 872 844
- US-A- 2 919 509
- US-A- 4 172 633
- US-A- 5 000 543

## Description

La présente invention concerne une nouvelle conception de stéréoscope pliable.
Un stéréoscope est une visionneuse binoculaire permettant de visualiser des images stéréoscopiques donnant la sensation de relief. Les vues étant observées par transparence, la plupart utilisent la lumière environnante à travers un diffuseur de lumière en regard de deux fenêtres dans un côté de la visionneuse.

Par US n° 2872844 et US n° 5000543, on connait des stéréoscopes pliables constitués de carton plié et collé ou emboité, selon le préambule de la revendication 1. Ils ne permettent cependant pas d'isoler parfaitement l'image stéréoscopique dans un boitier ou la lumière ne pénètre qu'au travers des vues stéréoscopiques, et d'obtenir une préhension et une observation confortables et aisées pour l'utilisateur, tout en protégeant le système optique lorsque le stéréoscope est en position de rangement.

Le stéréoscope selon l'invention permet par son pliage, d'éliminer les lumières parasites qui défavorisent l'observation des images stéréoscopiques, d'améliorer l'ergonomie en obtenant une forme plus préhensible et mieux adaptée au visage humain, et de protéger les lentilles optiques et éventuellement les images stéréoscopiques des agressions extérieures, lorsque le dispositif selon l'invention est en position de rangement. Il se caractérise par les mesures techniques de la partie caractérisante de la revendication 1.

Comme dans US n° 2872844, il est constitué essentiellement de carton ou autres matériaux pliables, d'une seule pièce, pliée et collée ou emboitée et, en position de rangement, il se présente comme une boite aplatie sur deux de ses quatre côtés.

Pour mettre le dispositif selon l'invention en position d'utilisation, il faut redresser les deux côtés latéraux reliés chacun aux faces supérieure et inférieure par une ligne de pliage, afin de mettre la boîte en volume, puis relever les deux volets reliés chacun à l'une des faces supérieure ou inférieure par une ligne de pliage et repliés à l'intérieur du boitier, et supportant, l'un le système optique, l'autre les deux fenêtres des images stéréoscopiques et éventuellement le diffuseur, jusqu'à ce que les ergots (dont le nombre est variable) situés sur le bord libre de chacun des volets viennent se placer dans les perforations de la face supérieure ou inférieure, assurant ainsi leur perpendicularité. Il suffit alors de regarder dans la boite au travers des lentilles pour observer l'image en relief.

La surface intérieure du boitier a une densité optique suffisante pour avoir la pénombre dans la boite et favoriser l'observation de l'image en relief.

Pour ranger le dispositif, la face supérieure ou inférieure doit-être légèrement soulevée afin de libérer les ergots. Les deux volets pourront ainsi être rabattus vers l'intérieur de la boite, ce qui permettra de plier celle-ci en l'aplatissant. Le système optique et éventuellement les images stéréoscopiques se trouvent alors enfermés et donc protégés, à l'intérieur du pliage.

Pour permettre le passage du nez de l'utilisateur lors de l'observation de l'image, une ouverture est placée au centre du volet supportant les lentilles, et se prolonge sur la face inférieure (le fond). Cette ouverture donne aussi accès à l'intérieur du dispositif pour relever et placer les deux volets dans leur position d'utilisation.

Le système optique est constitué de deux lentilles convergentes en plastique (ou en verre) et bi-convexes (les plan-convexes conviennent également). Elles sont fixées au carton par emboitage, par collage, ou prises en sandwich entre deux faces d'un volet du boitier, percées de deux trous d'un diamètre inférieur à celui des lentilles, repliées et collées l'une contre l'autre. Une entretoise en carton (en microcannelure par ex.) percée de deux trous légèrement plus grands que le diamètre des lentilles est également prise en sandwich, permettant ainsi d'insérer aisément les optiques lors du montage, de rattraper l'épaisseur de celles-ci, et de rigidifier le volet. Cette entretoise sera découpée en tenant compte de l'ouverture prévue pour le passage du nez.

Le système optique peut aussi être constitué d'une seule pièce en plastique injecté, sur laquelle les deux axes optiques correspondant aux yeux, se situeront à une distance moyenne de l'ordre de 63 mm l'un de l'autre. Le bord supérieur de cette pièce reprend la même courbe que celle des deux volets et comporte les ergots qui sont donc en plastique. Cette pièce sera alors collée ou emboîtée sur le volet en carton. Elle comportera également des picots de placement, et un bourelet situé au pourtour du passage du nez.

La vue stéréoscopique est constituée de deux images de format variable. Elles peuvent-être séparées mais il est préférable de les avoir d'un seul tenant, sous forme de bande, sur laquelle est reproduit un couple d'images. L'intervalle entre les deux vues doit correspondre à l'écartement moyen des yeux et est fonction du format des images. Celles-ci sont cadrées par des fenêtres découpées dans le volet du boitier ou dans des caches indépendants du boitier.

La fabrication en série de ces couples peut-être obtenue par duplication photographique traditionnelle de diapositives. Une bande diffusante sera placée derrière le couple, afin de bien diffuser la lumière extérieure lors de l'observation.

La reproduction des vues peut aussi se faire par impression sur support polyester diffusant (ou autres matériaux translucides) avec les techniques d'imprimerie. La bande diffusante ne sera alors plus nécessaire.

Les images et les diffusants (s'il y a lieu) sont fixés sur le volet en carton.

Selon une variante illustrée en pointillé, les couples d'images peuvent-être interchangeables, et se présenter sous forme de cartes indépendantes du stéréoscope, sur lesquelles se trouvent un ou plusieurs couples d'images. Seul le diffuseur est alors fixé sur le volet du boitier. Une fente située sur la face supérieure permet l'introduction des images.

Un système modulable de perforations et de tenons de repérage augmente la qualité et la vitesse d'assemblage du stéréoscope.

Les dessins annexés illustrent l'invention :
- La *figure 1* représente en perspective le stéréosccope selon l'invention en position de rangement.
- Les *figures 2 et 3* représentent ce même stéréosccope dans une étape intermédiaire pour passer en position d'utilisation.
- La *figure 4* représente en perspective le stéréosccope en position d'utilisation, avec vue sur le volet supportant le système optique, avec la variante des vues interchangeables illustrée en pointillé.
- La *figure 5* représente en perspective le dispositif en position d'utilisation, avec vue sur le volet supportant les images stéréoscopiques.
- La *figure 6* représente le dispositif en position de rangement, en vue de dessous.
- La *figure 7* représente le plan de découpe du développé du dispositif.
- La *figure 8* représente le système optique quand il est constitué d'une seule pièce en plastique injecté.

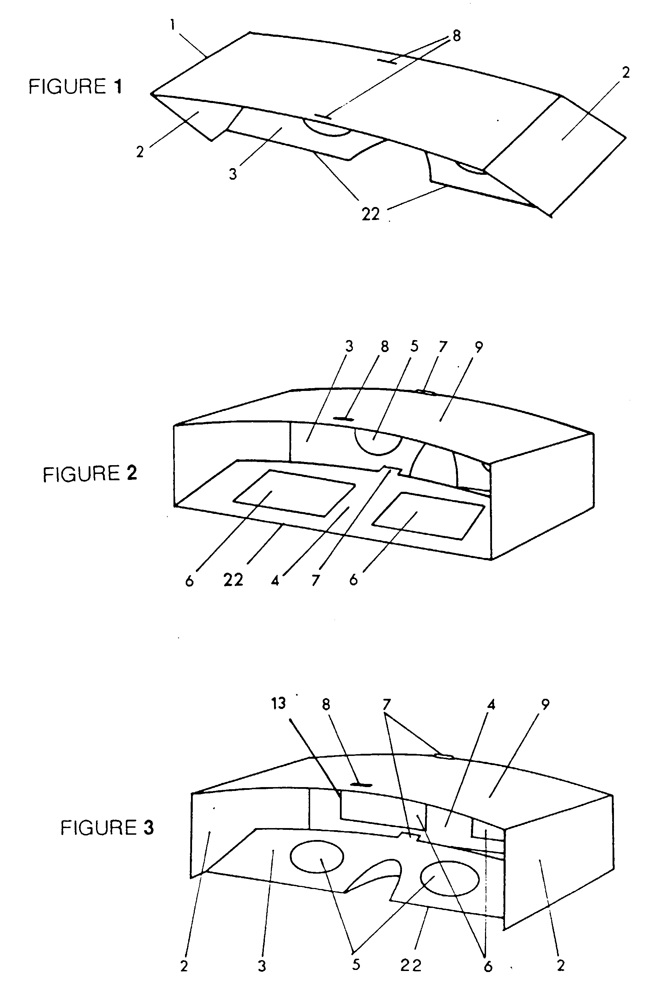

En référence à la *figure 1,* le dispositif constitue un boîtier aplati (**1**). dont les deux petits côtés (**2**) sont relevables afin que les quatre côtés forment un parallélépipède rectangle avec les faces supérieure (**9**) et inférieure (**11**).

En référence aux *figures 1*, *2 et 3*, les volets (**3-4**) sont repliés à l'intérieur du boitier (**1**), protégeant ainsi le système optique (**5**) et les fenêtres (**13**) des agressions extérieures lorsque le stéréoscope est en position de rangement.

En référence aux *figures 2 et 3*, ce même boitier comprend deux volets (**3**) et (**4**) qui se déplient selon les plis (**22**). Le volet (**3**) comporte le système optique (**5**), et le volet (**4**), le diffuseur et les images stéréoscopiques (**6**). Quand les deux volets sont relevés, les ergots (**7**) se placent dans les perforations (**8**).

Les bords libres des deux volets (**3 -4**) sur lesquels se situent les ergots (**7**), sont courbes, ce qui provoque un effet de ressort sur la face supérieure (**9**) ou inférieure (**11**) lorsque les volets sont relevés, favorisant ainsi la mise en place et le maintien des ergots (**7**) dans les perforations (**8**), et le bon placage de la face supérieure (**9**) ou inférieure(**11**) sur le bord libre et courbe des volets (**3-4**), limitant ainsi l'entrée de lumière parasite dans le boitier (**1**). Afin d'augmenter cet effet de ressort, le sens des fibres du carton est parallèle aux lignes de pliage (**22**).

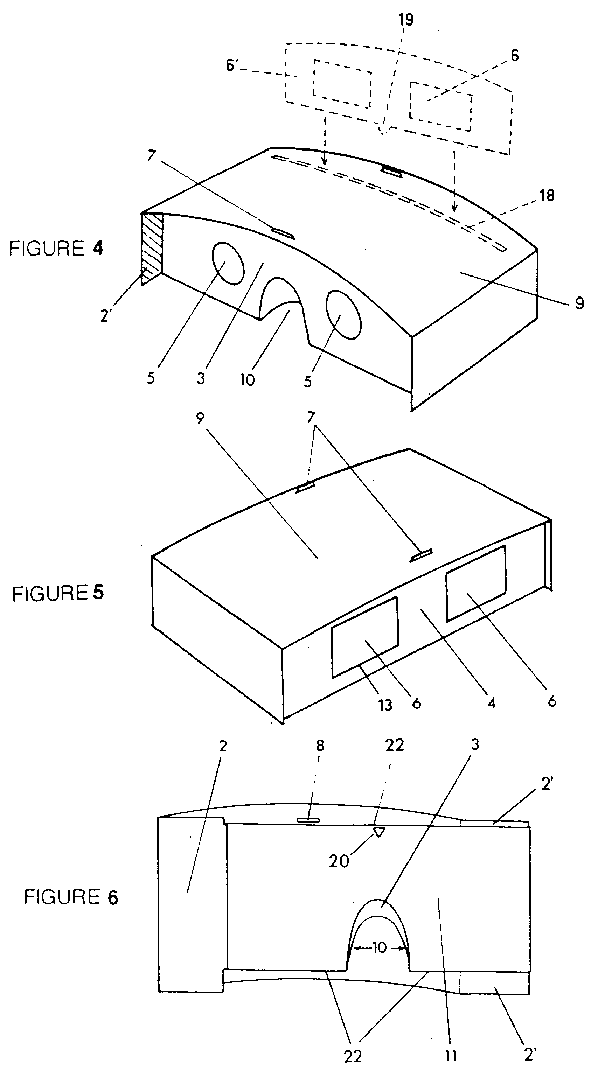

En référence aux *figures 4 et 5*, pour ranger le dispositif, il faut soulever la face supérieure (**9**), afin de libérer les ergots (**7**), permettant ainsi de replier les volets (**3**) et (**4**) vers l'intérieur du boiter.

Les deux côtés (**2**) dépassent par rapport aux volets (**3-4**), formant ainsi des oeillères (**2'**) qui limitent le passage de la lumière parasite lors de l'observation des images stéréoscopiques.

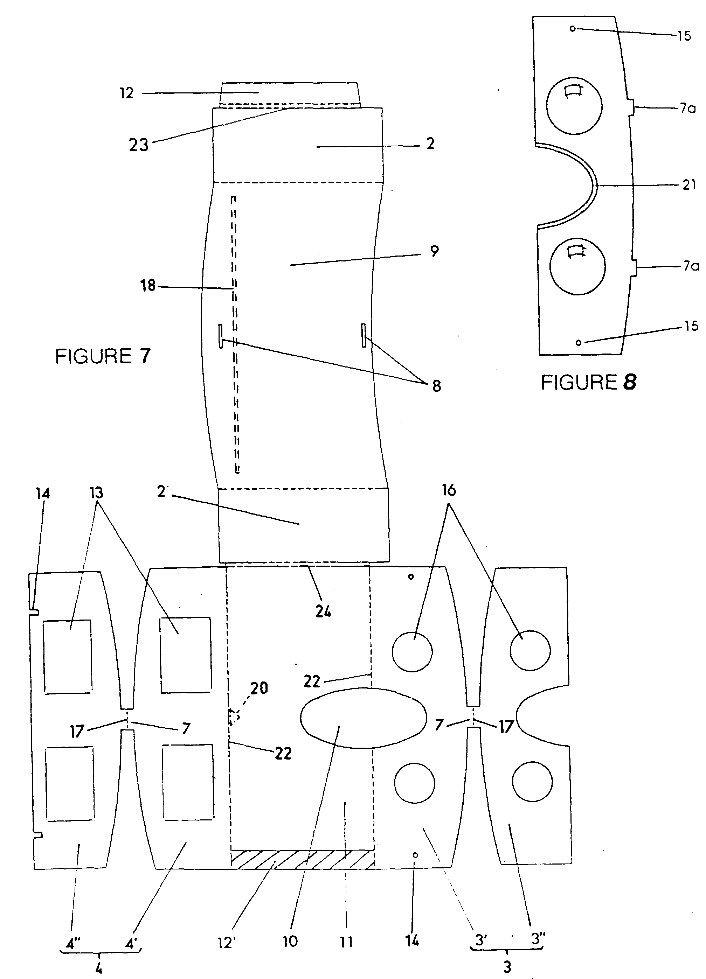

Le tracé en pointillé de la *figure 4* représente une variante permettant de changer les vues (**6**) fixées sur un support (**6'**) en les glissant dans la fente (**18**). L'ergot (**19**) vient se placer dans une perforation (**20**) (visible sur les *figures 6 et 7*) situé dans le fond du boitier, permettant le maintien vertical de la carte interchangeable.

Une ouverture (**10**) permet le passage du nez de l'observateur. Elle se situe au centre du volet (**3**) et se prolonge sur la face inférieure (**11**).

En référence à la *figure 6*, cette ouverture (**10**) permet également d'accéder au volet (**3**) et (**4**) par l'intérieur, de manière à les déplier.

En référence à la *figure 7,* la découpe et l'impression du développé du boitier sont réalisées avec les techniques classiques de la découpe en série des cartonnages, et de l'imprimerie.

Après pliage des plis (**23**) et (**24**), la languette (**12**) est collée ou emboitée sur la zone (**12'**) de la face inférieure (**11**). Les images plus leur diffuseur et les lentilles sont montés pris en sandwich, respectivement entre les faces (**4'**) et (**4"**) du volet (**4**), et (**3'**) & (**3"**) du volet (**3**), après pliage des plis (**17**), formant ainsi les ergots (**7**) des volets (**3-4**).

Les fenêtres découpées (**13**) des faces (**4'**) et (**4"**) cadrent les vues.

Selon une variante non illustrée, le nombre d'ergots peut varier.

Selon une autre variante non illustrée, les faces (**3"**) et/ou (**4"**) peuvent-être supprimés. Les lentilles et/ou les vues sont alors fixées directement sur les faces (**3'**) et/ou (**4'**).

Les perforations (**14**) sont utilisées lors du montage des lentilles et des images. Ce système de repérage est modulable en fonction des optiques et des vues utilisées.

La *figure 8* représente la forme de la pièce d'optique en plastique injecté. Les ergots (**7a**) sont intégrés à la pièce, qui présente également des picots en relief (**15**) de placement. Un léger bourrelet (**21**) dépassera du volet (**3**), sur lequel le nez de l'observateur viendra s'appuyer, évitant ainsi les traces de transpiration sur le carton.

A titre d'exemple non limitatif, le boitier en position d'utilisation aura des dimensions de l'ordre de 15 cm de long, 9 cm de large et 4 cm de haut.

Par l'impact visuel de l'image en relief, par l'exploitation des surfaces imprimables et contre-collables, et par son faible coût de revient, la présente invention est particulièrement destinée à des applications publicitaires et promotionnelles. Elle peut également servir d'outil de communication, de moyen pédagogique et éducatif, et de support pour diverses publications.

## Revendications

1. Stéréoscope pliable, constitué d'un boîtier **(1)** d'une seule pièce en carton ou autre matériau pliable, plié et collé ou emboîté, et comprenant une face supérieure **(9)**, une face inférieure **(11)**, et quatre côtés opposés deux deux **(2,3-4)**, deux des côtés opposés **(3-4)** présentant l'un **(3)** un système optique à deux lentilles **(5)** situées dans le même plan dudit côté, et l'autre **(4)** deux fenêtres **(13)** de passage de lumière ambiante couvertes d'un diffuseur coopérant avec deux vues stéréoscopiques **(6)** fixées, de manière amovible ou non, sur ledit côté, et deux côtés opposés **(3-4)** constituant des volets reliés chacun à l'une des faces supérieures **(9)** ou inférieure **(11)** par une ligne de pliage respective, tandis que les deux autres côtés opposés **(2)** sont chacun relié à chacune des faces supérieure **(9)** et inférieure **(11)** par une ligne de pliage respective, de sorte qu'en position de rangement le stéréoscope se présente comme un boîtier aplati sur lesdits deux autres côtés opposés **(2)**, et s'utilise en redressant lesdits deux autres côtés opposés **(2)** afin de mettre le boîtier **(1)** en volume et de pouvoir relever les deux volets **(3-4)** repliés à l'intérieur du boîtier **(1)** jusqu'à ce que des ergots **(7)** situés sur les bords libres des volets **(3-4)** opposés à leur ligne de pliage se placent dans des perforations **(8)** de la face supérieure **(9)** ou inférieure **(11)** à laquelle le volet correspondant n'est pas relié par sa ligne de pliage,
caractérisé en ce que le système optique **(5)** et les deux fenêtres **(13)** sont présentés par les deux volets **(3-4)**, repliables vers l'intérieur du boîtier **(1)**, protégeant ainsi le système optique **(5)** et les deux fenêtres **(13)** des agressions extérieures lorsque le stéréoscope est en position de rangement, et dont le bord libre et opposé à la ligne de pliage de ces deux volets **(3-4)** est courbe et provoque un effet de ressort sur la face supérieure **(9)** ou inférieure **(11)** présentant les perforations **(8)** dans lesquelles les ergots **(7)** du bord libre se placent lorsque les volets **(3-4)** sont dépliés, favorisant ainsi la mise en place et le maintien des ergots **(7)** dans les perforations **(8)** et le bon placage de la face supérieure **(9)** ou inférieure **(11)** sur le bord libre et courbe des volets **(3-4)**, limitant ainsi l'entrée de lumière parasite dans le boitier **(1)**.

2. Stéréoscope selon la revendication **1**, caractérisé en ce qu'en position d'utilisation, les deux autres côtés opposés (**2**) dépassent par rapport aux volets **(3-4)** pour former des oeillères **(2')** afin de favoriser l'observation des images en diminuant la lumière parasite.

3. Stéréoscope selon l'une des revendications **1** et **2**, caractérisé en ce que les deux volets **(3-4)** sont liés par leur ligne de pliage **(22)** à la partie inférieure **(11)** et présentent au moins un ergot **(7)** sur leur bord libre supérieur courbe.

4. Stéréoscope selon l'une des revendications **1** à **3**, caractérisé en ce que les deux fenêtres **(13)** sont formées dans les deux faces **(4'-4")** du volet **(4)**, repliées l'une sur l'autre suivant un pli **(17)**, situé sur au moins une languette de liaison des deux faces **(4'-4")**, telle que la languette repliée forme un ergot **(7)**.

5. Stéréoscope selon l'une des revendications **1** à **4** caractérisé en ce que le volet **(4)** porte au moins un diffuseur constituant ledit diffuseur recouvrant les fenêtres **(13)**.

6. Stéréoscope selon l'une des revendications **1** à **5**, caractérisé en ce que le système optique **(5)** est constitué d'une seule pièce en plastique injecté, comportant les ergots **(7a)**, un bourelet **(21)** situé au pourtour du passage du nez et qui est en débord du volet **(3)** sur lequel est fixée la pièce, et des picots de placement **(15)**.

7. Stéréoscope selon la revendication **4** caractérisé en ce que les vues stéréoscopiques **(6)** sont prises en sandwich entre les faces **(4'-4")** du volet **(4)**, et cadrées par les fenêtres **(13)**.

8. Stéréoscope selon l'une des revendications **1** à **6**, caractérisé en ce que les vues stéréoscopiques **(6)** sont portées par un support **(6')** indépendant en carton ou autre matériau, comportant un ergot **(19)** de maintien vertical venant se placer dans une perforation **(20)** située dans le fond **(11)** du boitier **(1)**, et sont interchangeables au moyen d'une fente d'introduction **(18)** située sur la face supérieure **(9)**.

## Patentansprüche

1. Zusammenklappbares Stereoskop (1), in einem Stück aus Karton oder einem anderen faltbaren Material gefertigt; in einer Art und Weise gefaltet und geklebt oder zusammengesteckt, daß sich eine Ober- (9) und eine Unterseite (11), sowie vier Seitenteile, die sich immer zwei und zwei gegenüberliegen (2,3-4), bilden. Dabei tragen von zwei sich gegenüberliegenden Seiten (34) auf der gleichen Ebene, die eine Seite (3) das optische System (5) und die andere Seite (4) zwei für das einfallende Licht mit lichtverteilendem Film bestückte Sichtfenster (13), an denen gleichzeitig auch der Filmstreifen mit den stereoskopischen Aufnahmen (6) auf Dauer oder abnehmbar befestigt ist. Zwei sich gegenüberliegende Seiten (3-4) stellen von jeweils der Ober- (9) oder der Unterseite (11) durch eine vorgegebene Faltung abgehende Klappe dar, während die zwei anderen sich gegenüberliegenden Seiten (2) sowohl mit der Ober-(9) und Unterseite (11) durch eine vorgegebene Faltung verbunden sind. Somit stellt der Bildbetrachter in Ablageposition eine auf den beiden letzteren sich gegenüberliegenden Seiten (2) abgeflachte Schachtel dar. Zur Benutzung müssen die zwei Letztgenannten sich gegenüberliegenden Seiten (2) aufgestellt werden. Auf diese Weise erhält die Schachtel (1) ihr Volumen und die beiden Klappen (3-4), die mit den Zapfen (7) am oberen freien Rand der Klappen (3-4), der Faltlinie gegenüberliegend, im Schachtelinneren gefaltet geruht haben, gleiten ebenfalls in eine Position, bei der sich die Klappe seiner Faltlinie gegenüber dank der Zapfen, die sich in die Perforationen (8) fügen, jeweils mit der Ober- (9) oder Unterseite (11) verbindet,
**dadurch gekennzeichnet**, daß sein optisches System (5) und die zwei Sichtfenster (13) auf den Klappen (3-4), die zu deren Schutz in Ablageposition in das Schachtelinnere (1) geklappt werden können und deren, der Faltlinie gegenüberliegende, obere gerundete Rand durch seine Form einen Sprungfedereffekt auf die Ober- (9) oder Unterseite (11) der Schachtel (1) ausübt, welche ihrerseits die Perforationen (8) für die dazugehörigen Zapfen (7), am oberen freien Rand der Klappen (3-4) sichtbar wenn entfaltet, aufweisen. Diese Rundung spielt eine entscheidende Rolle sowohl für die Verbindung und den allgemeinen Halt der Zapfen (7) in den Perforationen (8), als auch die Anschmiegbarkeit der Ober- (9) oder Unterseite (11) an besagtem oberen runden Rand der Klappen (3-4) und schließt störenden Lichteinfall in die Bildbetrachterschachtel (1) weitgehendst aus.

2. Stereoskop nach Anspruch 1 **dadurch gekennzeichnet**, daß die zwei sich gegenüberliegenden Seiten (2) über die Klappen (3-4) hinausragen um eine Art Visir (2') zu bilden, das dazu dient, die stereoskopischen Aufnahmen unter Ausschluß störenden Lichteinfalles betrachten zu können.

3. Stereoskop nach einem der Ansprüche 1 und 2, **dadurch gekennzeichnet**, daß die beiden Klappen (3-4) durch ihre Faltlinie (22) mit der Unterseite (11) verbunden sind und mindestens einen Zapfen (7) auf dem jeweiligen freien oberen Rand aufweisen.

4. Stereoskop nach einem der Ansprüche 1 bis 3, **dadurch gekennzeichnet**, daß die zwei Sichtfenster (13) in beiden Hälften (4'-4") der Klappe (4) eine über die andere, endsprechend der Faltlinie (17), gefaltet sind und welche wenigstens ein Verbindungsstück zwischen den Hälften (4'4") aufweisen, welches die Aufgabe des Zapfens (7) übernimmt.

5. Stereoskop nach einem der Ansprüche 1 bis 4, **dadurch gekennzeichnet**, daß die Klappe (4) mindestens einen Lichtverteiler in den Sichtfenstern (13) trägt.

6. Stereoskop nach einem der Ansprüche 1 bis 5, **dadurch gekennzeichnet**, daß das optische System (5) aus einem eingespritzten Plastikstück besteht, das Zapfen (7a), einen Wulst (21) im Ausschnitt für die Nase, über den Klappenrand (3) an dem es befestigt wird hinausreichend und kleine Späne zur Justierung (15) aufweist.

7. Stereoskop nach Anspruch 4, **dadurch gekennzeichnet**, daß die stereoskopischen Aufnahmen (6) zwischen die Hälften (4'-4") der Klappe (4) geklemmt und von Sichtfenstern (13) gerahmt werden.

8. Stereoskop nach einem der Ansprüche 1 bis 6, **dadurch gekennzeichnet**, dass die stereoskopischen Aufnahmen (6) sich auf einem unabhängigen Träger (6') aus Karton oder anderem Material befinden, der mit einem Zapfen (19) versehen ist, welcher vertikal in die Bodenperforation (20) auf der Unterseite (11) der Schachtel (1) gleitet. Diese Träger sind auswechselbar und werden durch einen Schlitz (18) in der Oberseite (9) sowohl eingelegt wie herausgenommen.

## Claims

1. Foldable stereoscope, comprising a box **1** in one piece in cardboard or other material which is similarly transformable, folded and bonded or slotted, and having one upper face **9**, one lower face **11**, and four sides facing each other two by two **2, 3-4**, one of the first two opposite sides **1** having an optical system with two lenses **5**, the other **4** having two windows **13** allowing ambient light to pass onto at least one diffuser operating with two stereoscopic views **6**, removable or fixed to this side **4**, and the two other opposite sides **3-4** being flaps which are respectively linked to the upper **9** and lower **11** faces via a folding line, in such a way that when in a folded position the stereoscope has the form of a box which is flattened on to the two aforementioned opposite sides **2**, and is used by lifting these other opposite sides **2** in order to give the box **1** volume, and allowing the two flaps **3-4** folded back inside the box to be lifted until the lugs **7**, which are located on the free edges of the flaps **3-4** opposite their folding line, are slotted into the perforations **8** in the upper **9** or lower **11** face to which the corresponding flap is not linked by its folding line.
**characterized by** the fact that the optical system 5 and the two windows **13** are presented by the two flaps **3-4** which may be folded down inside the box **1** thus protecting the optical system **5** and the windows **13** from outside aggression when the stereoscope as defined in the invention is in a folded position, and whose free edges of these two flaps **3-4** are curved and cause a spring effect on the upper **9** or lower **11** face, presenting perforations **8** into which the lugs **7** of the free edges are slotted when the flaps **3-4** are unfolded, thus helping in the assembly and support of the lugs **7** in the perforations **8** and the proper positioning of the upper **9** or lower **11** face on the free edge and curve of the flaps **3-4**, thus limiting the entry of parasitic light into the box **1**.

2. Stereoscope under claim **1, characterized by** the fact that in its position for use, the two other opposite sides **2** jut out in relation to the flaps **3-4** to form blinkers **2'** which aid observation of images by reducing parasitic light.

3. Stereoscope under either claim **1** or **2**, **characterized by** the fact that the two flaps **3-4** are linked by their folding line **22** to the lower part **11** and have at least one lug **7** on their free upper curved edge.

4. Stereoscope under any of claims **1** to **3**, **characterized by** the fact that the two windows **13** are shaped in the two faces **4'-4"** of the flap **4**, folded back over one another along a fold **17**, located on at least one linking tongue of the two faces **4'-4"** in such a way that the folded back tongue forms a lug **7**.

5. Stereoscope under any of claims **1** to **4**, **characterized by** the fact that the flap 4 presenting the windows **13** also carries at least one diffuser.

6. Stereoscope under any of claims **1** to **5**, **characterized by** the fact that the optical system **5** is made of a single piece of injected plastic, with lugs **7a**, a flange **21** located around the nose passage and which juts out from the flap **3** on which the part is fixed, and positioning pins **15**.

7. Stereoscope under claim **4, characterized by** the fact that the stereoscopic views **6** are sandwiched between the faces 4'-4" of the flap 4, and framed by the windows **13**.

8. Stereoscope under any of claims **1** to **6**, **characterized by** the fact that the stereoscopic views **6** are born by an independent support **6'** in cardboard or other material, comprising a vertical support lug **19** which is slotted into a perforation **20** located at the bottom **11** of the box **1**, and are interchangeable using an introduction slot **18** located in the upper face **9**.
